# EUROPÄISCHE PATENTSCHRIFT

(11) **EP 2 027 647 B1**
(45) Veröffentlichungstag und Bekanntmachung des Hinweises auf die Patenterteilung: **28.09.2011**
(21) Anmeldenummer: 08757930.6
(22) Anmeldetag: 12.04.2008
(51) Int. Cl.: H02M 3/158, H02J 3/38, H02M 7/48

(54) **VORRICHTUNG ZUR EINSPEISUNG ELEKTRISCHER ENERGIE IN EIN ENERGIEVERSORGUNGSNETZ UND GLEICHSPANNUNGSWANDLER FÜR EINE SOLCHE VORRICHTUNG**
DEVICE FOR FEEDING ELECTRIC ENERGY INTO A POWER GRID AND DC CONVERTER FOR SUCH A DEVICE
DISPOSITIF D'ALIMENTATION ÉLECTRIQUE DANS UN RÉSEAU D'ALIMENTATION ÉLECTRIQUE ET CONVERTISSEUR DE TENSION CONTINUE DESTINÉ À UN TEL DISPOSITIF

(30) Priorität: 15.06.2007 DE 102007028077
(43) Veröffentlichungstag der Anmeldung: 25.02.2009
(73) Patentinhaber: SMA Solar Technology AG, 34266 Niestetal (DE)
(72) Erfinder: ZACHARIAS, Peter, 34131 Kassel (DE); SAHAN, Benjamin, 34121 Kassel (DE)
(74) Vertreter: Walther, Walther & Hinz GbR
(86) Internationale Anmeldenummer: PCT/DE2008/000619
(87) Internationale Veröffentlichungsnummer: WO 2008/151587

(56) Entgegenhaltungen:
- WO-A-2007/073946
- DE-A1-102006 033 851
- US-A- 5 977 753
- US-A1- 2007 047 277

## Beschreibung

Die Erfindung betrifft eine Vorrichtung der im Oberbegriff des Anspruchs 1 angegebenen Gattung und einen dafür geeigneten Gleichspannungswandler.

Zur Einspeisung elektrischer Energie, die mit Gleichspannungsgeneratoren wie z. B. Photovoltaik- oder Brennstoffzellenanlagen erzeugt wird, in ein Wechselstromnetz, insbesondere das öffentliche Energieversorgungsnetz (50/60 Hz), werden Wechselrichter der verschiedensten Art verwendet. Zwischen dem Gleichspannungsgenerator und dem Wechselrichter ist in den meisten Fällen ein Gleichspannungswandler (DC-DC-Steller) vorgesehen, der dem Zweck dient, die vom Gleichspannungsgenerator gelieferte Gleichspannung in eine vom Wechselrichter benötigte bzw. an diesen angepasste Gleichspannung umzuwandeln.

Aus verschiedenen Gründen ist es erwünscht, einen der Ausgänge des Gleichspannungsgenerators zu erden, wobei im Rahmen der vorliegenden Erfindung insbesondere solche Fälle betrachtet werden, bei denen der Erdanschluss am negativen Ausgang des Gleichspannungsgenerators vorgesehen wird. Der Grund für die gewünschte Erdung besteht einerseits darin, dass es Länder gibt, in denen eine solche Erdung vorgeschrieben ist. Andererseits ergeben sich bei fehlender Erdung verschiedene Nachteile beim Betrieb. Hierzu zählt u. a. das Problem der hochfrequenten Ableitströme. Aufgrund von unvermeidbaren parasitären Kapazitäten zwischen dem Gleichspannungsgenerator und Erde kann es bei Potentialschwankungen zu nicht unerheblichen Ausgleichsströmen kommen, die ein nicht tolerierbares Sicherheitsrisiko darstellen, daher zum Berührungsschutz bzw. zur Herstellung der elektromagnetischen Verträglichkeit (EMV) aufwendige Überwachungsmaßnahmen mit Hilfe von Fehlerstromsensoren od. dgl. erforderlich machen und nur durch Erdung sicher vermieden können. Potentialschwankungen am Gleichspannungsgenerator können weiter bei bestimmten Solarmodulen wie z. B. Dünnschichtmodulen od. dgl. zu dauerhaften Zerstörungen führen.

Eine Erdung der beschriebenen Art ist ohne weiteres dann möglich, wenn Gleichspannungswandler mit Transformatoren verwendet werden, die eine galvanische Trennung der Gleichspannungsseite von der Wechselspannungsseite herbeiführen. Transformatoren haben aber unabhängig davon, ob Netztransformatoren oder Hochfrequenztransformatoren verwendet werden, u. a. eine Reduzierung des Wirkungsgrades, zum Teil erhebliche Gewichte und Baugrößen und/oder einen zusätzlichen Regelungsaufwand zur Folge, weshalb grundsätzlich transformatorlose Spannungswandler bevorzugt werden. Die üblichen Topologien von transformatorlosen Gleichspannungswandlern machen jedoch die gewünschte Erdung entweder unmöglich, da dies zum Kurzschließen von benötigten Schaltern, Kapazitäten od. dgl. führen würde, oder haben einen erhöhten Schaltungsaufwand und andere Nachteile zur Folge.

Es sind daher bereits zahlreiche Versuche unternommen worden, das Auftreten der genannten Nachteile auf anderem Wege zu vermeiden. Insbesondere sind Schaltungen bekannt, die dem Zweck dienen, die unerwünschten Ableitströme zu reduzieren (z. B. DE 10 2004 037 446 A1, DE 102 21 592 A1, DE 10 2004 030 912 B3). In diesen Schaltungen wird z. B. ein Solargenerator in bestimmten Phasen des inneren elektrischen Energietransports vom Netz isoliert betrieben. Bei der periodischen erneuten elektrischen Verbindung des Solargenerators mit dem Netz werden dann dessen parasitäre Kapazitäten nur geringfügig umgeladen, so dass sich das Potential des Solargenerators mit Netzfrequenz sinusförmig und bei einer Spannungsamplitude, die der halben Netzspannung entspricht, ändert. Hochfrequenzströme bilden sich dann durch die geringen Spannungsunterschiede des Solargenerators nur zwischen zwei Schalttakten sowie durch Unsymmetrien beim Schalten aus. Kapazitive Ableitströme lassen sich auf diese Weise daher zwar stark minimieren, aber prinzipiell nicht völlig vermeiden.

Weiterhin ist eine Schaltungsanordnung bekannt (DE 102 25 020 A1), die einen geteilten Solargenerator verwendet, dessen Mittelpunkt geerdet ist. Damit haben alle Teile des Solargenerators ein festes Potential, und kapazitive Ableitströme können prinzipiell nicht fließen. Da die beiden Gleichstromquellen unterschiedliche Ergiebigkeiten haben, ist außerdem eine Schaltung zur Kompensation der Leistungsdifferenzen und Spannungen vorgesehen. Nachteilig sind in diesem Schaltungsvorschlag die hohen Spannungsdifferenzen im Solargenerator und an den Schaltern, die zusätzlichen Verluste in der Kompensationsschaltung und der Umstand, dass mindestens vier hochfrequent getaktete Schalter benötigt werden.

Daneben sind auch bereits Schaltungsanordnungen bekannt, mit denen ein Solargenerator trotz Fehlens eines Transformators einseitig geerdet werden kann. Dadurch werden kapazitive Ableitströme prinzipbedingt verhindert. Eine dieser Schaltungsanordnungen (DE 196 42 522 C1) benötigt allerdings fünf aktive Schalter, wobei ein bzw. zwei Schalter gleichzeitig hochfrequent schalten und den mittleren Ausgangsstrom bereitstellen müssen. Bei dieser auch als "Flying Inductor" bezeichneten Schaltung wird daher der Wirkungsgrad durch die hohe Zahl der gleichzeitig in Serie am Stromfluss beteiligten Bauelemente beeinträchtigt. Nachteilig ist bei dieser Schaltung auch, dass lückende Strompulse in das Netz eingeprägt werden, die ein kapazitives Netzfilter erforderlich machen, das prinzipbedingt durch seinen eigenen Blindleistungsbedarf den Leistungsfaktor, aber auch den Wirkungsgrad der Schaltung im Teillastbereich verschlechtert. Ein derartiges kapazitives Netzfilter kann zwar mit einer anderen bekannten Schaltung vermieden werden (DE 197 32 218 C1), doch werden dazu neun aktive Schalter benötigt, von denen mindestens zwei gleichzeitig mit hohen Frequenzen geschaltet werden müssen, so daß der konstruktive Aufwand noch weiter erhöht und sowohl die Robustheit als auch der Wirkungsgrad der Gesamtvorrichtung negativ beeinflusst würde. Die Topologie eines Flying Inductor hat außerdem den Nachteil, dass die Spannungsbelastung der Schalter von der Netzspannung abhängt und sensibel gegenüber Netzstörungen ist und nur dadurch drelphasig betrieben werden kann, dass er mit Hilfe von drei Wechselrichtern dreifach angewendet wird.

Schließlich sind Vorrichtungen der eingangs bezeichneten Gattung bekannt (US 2007/0047277 A1), die für Wechselrichter mit einem bipolaren Spannungszwischenkreis bestimmt sind, der zwei in Serie liegende, an einem Erdanschluss miteinander verbundene Kondensatoren enthält. Derartige Wechselrichter, die heute überwiegend für die hier interessierenden Zwecke angewendet werden, können als sogenannte Halbbrückenwechselrichter, als Halbbrückenwechselrichter in 3-Punkt-Schaltung und je nach Bedarf als Wechselrichter für eine einphasige oder dreiphasige Netzeinspeisung ausgebildet sein. In allen diesen Fällen bildet der Verbindungspunkt zwischen den beiden Kondensatoren einen Erdanschluss, der dem Null- bzw. Neutralleiter des jeweiligen Netzes zugeordnet ist und mit diesem verbunden wird.

Der Gleichspannungswandler dieser bekannten Vorrichtung enthält eine Speicherdrossel, zwei Dioden und einen Schalter. Der Erdanschluss des Wechselrichters kann in diesem Fall mit dem negativen Ausgang des Gleichspannungsgenerators verbunden werden. Dies wird durch Anwendung einer Speicherdrossel ermöglicht, die aus zwei magnetisch gekoppelten Wicklungen zusammengesetzt ist. Die beiden Wicklungen dieser Speicherdrossel sind an einem Ende derart galvanisch miteinander verbunden, dass einerseits bei geschlossenem Schalter eine der beiden Wicklungen vom Gleichspannungsgenerator und die andere Wicklung aufgrund der magnetischen Kopplung über die erste Wicklung aufgeladen wird und dass andererseits bei offenem Schalter beide Wicklungen über je einen zugeordneten der beiden Kondensatoren und eine zugehörige Diode entladen werden.

Dem Vorteil, dass diese Vorrichtung mit vergleichsweise einfachen Mitteln, insbesondere ohne Transformator und mit nur einem Schalter eine Erdung des Gleichspannungsgenerators ermöglicht, steht der Nachteil gegenüber, dass der Schalter im geöffneten Zustand mit einer Spannung belastet wird, die sich aus der Summe der Ausgangsspannung des Gleichspannungsgenerators und der Spannung an einem der beiden Kondensatoren des Spannungszwischenkreises des Wechselrichters ergibt. Daraus folgt umgekehrt, dass die Ausgangsspannung des Gleichspannungsgenerators höchstens gleich der Differenz aus der zulässigen Spannung am Schalter und der Spannung am betreffenden Kondensator sein darf, um eine Zerstörung des Schalters mit Sicherheit zu vermeiden. Derartige Begrenzungen für die Ausgangsspannung des Gleichspannungsgenerators sind unerwünscht. Um die fließenden Ströme und damit die Verluste klein zuhalten, sind vielmehr Spannungen erwünscht, die wesentlich größer sind, als der genannten Spannungsdifferenz entspricht, so dass entweder aufwendige, entsprechend hoch belastbare Schalter erforderlich sind oder, bei Anwendung üblicher Schalter, eine Reduzierung der Ausgangsspannung am Gleichspannungsgenerator unerlässlich ist. Vorrichtungen dieser Art haben daher einen eingeschränkten Anwendungsbereich.

Aus der DE 10 2006 033 851 A1 sind Abwärtsspannungwandler zur Umwandlung einer z.B. 42 Volt Gleichspannung auf z.B. 3 Volt Gleichspannung bekannt, wobei eine Spule mit Anzapfung eingesetzt wird.

Ausgehend von diesem Stand der Technik besteht das technische Problem der Erfindung darin, die Vorrichtung der eingangs bezeichneten Gattung und insbesondere einen dafür geeigneten Gleichspannungswandler so auszubilden, dass eine Erdung des negativen Anschlusses des Gleichspannungsgenerators nicht nur ebenfalls mit vergleichsweise einfachen konstruktiven Mitteln, sondern auch unter deutlicher Reduzierung der Spannungsbelastung des Schalters des Gleichspannungswandlers realisiert werden kann.

Gelöst wird dieses Problem erfindungsgemäß mit den kennzeichnenden Merkmalen der Ansprüche 1, 2 und 11.

Die Erfindung ermöglicht einen geerdeten Betrieb des Gleichspannungs-generators durch Anwendung eines Gleichspannungswandlers, der im einfachsten Fall lediglich eine Speicherdrossel, drei Dioden und zwei Schalter benötigt. Dadurch wird trotz eines nur geringfügig erhöhten Aufwands der Vorteil erzielt, dass die maximale Belastung eines der Schalter nicht größer ist, als der Ausgangsspannung des Gleichspannungsgenerators entspricht, während die Spannungsbelastung am anderen Schalter nicht größer als die Spannung eines der Kondensatoren ist, so dass die Ausgangsspannung des Gleichspannungsgenerators im Gegensatz zur gattungsgemäßen Vorrichtung bis zur Belastungsgrenze der Schalter erhöht werden kann.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 den bekannten Aufbau einer Vorrichtung mit einem geerdeten Gleichspannungsgenerator zur Einspeisung elektrischer Energie in ein Energieversorgungsnetz;
Fig. 2 eine erfindungsgemäße Vorrichtung, mit einem geerdeten Gleichspannungsgenerator zur Einspeisung elektrischer Energie in ein Energieversorgungsnetz;
Fig. 3 die Signale zur Steuerung von zwei Schaltern der Vorrichtung nach Fig. 2 und daraus resultierende Stromverläufe;
Fig. 4 und 5 eine Vorrichtung entsprechend Fig. 2, jedoch mit einem jeweils modifizierten Gleichspannungswandler;
Fig. 6 eine Vorrichtung entsprechend Fig. 1, jedoch mit einem modifizierten Gleichspannungswandler; und
Fig. 7 bis 9 verschiedene Typen von Wechselrichtern, die alternativ zum Wechselrichter nach Fig. 1 mit dem erfindungsgemäßen Gleichspannungswandler betrieben werden können.

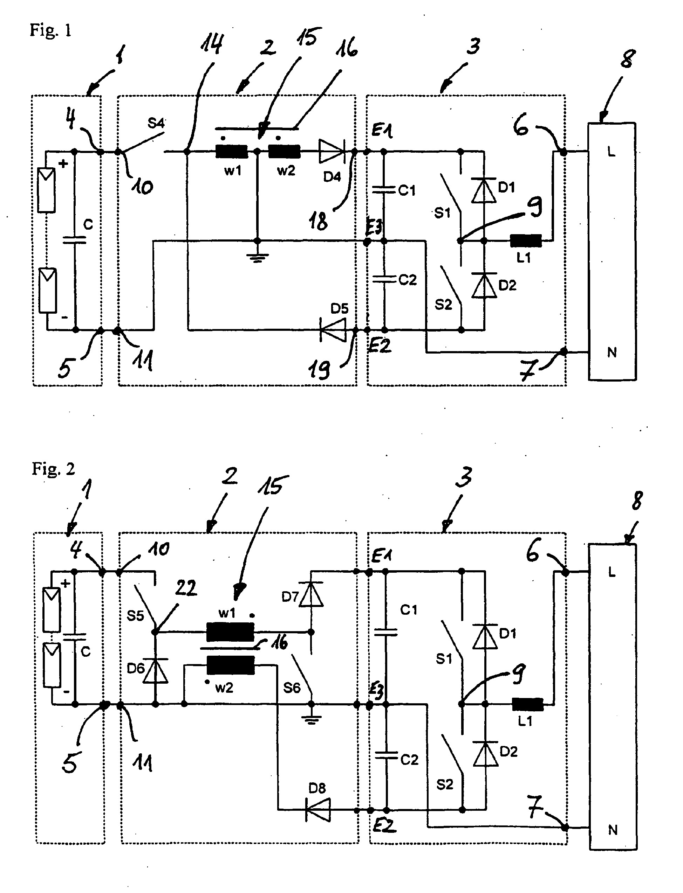

Nach Fig. 1 enthält eine übliche, im Rahmen der vorliegenden Erfindung betrachtete Vorrichtung einen Gleichspannungsgenerator 1, einen Gleichspannungswandler 2 und einen Wechselrichter 3. Der Gleichspannungsgenerator 1 besteht z. B. aus einer Photovoltaik-, oder Brennstoffzellenanlage und weist einen seinen beiden Ausgängen 4 (+) und 5 (-) parallel geschalteten Kondensator C auf (z. B. US 2007/0047277A1, Fig. 10).

Der Wechselrichter 3 der bekannten Vorrichtung weist zwei Ausgänge 6 und 7 auf, die hier zur einphasigen Einspeisung elektrischer Energie in ein Energieversorgungsnetz 8 dienen, dessen Phase L mit dem Ausgang 6 und dessen Null- oder Neutralleiter N mit dem Ausgang 7 verbunden wird. Der Wechselrichter 3 enthält außerdem drei Eingänge E1, E2 und E3. Zwischen den Eingängen E1 und E2 sind zwei in Serie verbundene Kondensatoren C1 und C2 angeordnet, deren Verbindungspunkt am Eingang E3 liegt. Die Kondensatoren C1 und C2 bilden einen üblichen, bipolaren Spannungszwischenkreis des Wechselrichters 3. Der Wechselrichter 3 ist gemäß Fig. 1 als Halbbrückenwechselrichter ausgebildet und dazu mit zwei Schaltern S1 und S2 versehen, deren einer.Anschluss jeweils mit einem der Eingänge E1 bzw. E2 verbunden ist und deren anderer Anschluss zu einem gemeinsamen Verbindungspunkt 9 und von dort über eine Glättungs- bzw. Netzdrossel L1 zum Ausgang 6 führt. Beiden Schaltern S1, S2 ist außerdem je eine Diode D1, D2 parallel geschaltet, wobei die Diode D1 vom Verbindungspunkt 9 aus in Richtung des Eingangs E1 und die Diode D2 vom Eingang E3 aus in Richtung des Verbindungspunkts 9 leitend gemacht werden kann und in der entgegengesetzten Richtung jeweils sperrt. Schließlich ist der Eingang E3 direkt mit dem Ausgang 7 verbunden, andererseits an Erde gelegt und damit als Erdanschluss ausgebildet und mit dem negativen Ausgang 5 des Gleichspannungsgenerators 1 verbunden.

Der Gleichspannungswandler 2 hat zwei mit den Ausgängen 4 und 5 des Gleichspannungsgenerators 1 zu verbindende Eingänge 10 und 11. An den Eingang 10 ist ein Schalter S4 angeschlossen, der zu einem Verbindungspunkt 14 führt. An diesem Verbindungspunkt 14 ist der eine Anschluss einer als gekoppelte Drossel ausgebildeten Speicherdrossel 15 angeschlossen. Die Speicherdrossel 15 enthält eine erste Wicklung W1 und eine zweiten Wicklung W2, die beide magnetisch miteinander gekoppelt und dazu z. B. auf einen gemeinsamen Kern 16 gewickelt sind. An ihren einen Enden sind die beiden Wicklungen W1, W2 unter Bildung eines weiteren Verbindungspunktes miteinander verbunden.

Der als Erdanschluss ausgebildete Eingang E3 des Wechselrichters 3 ist nicht nur mit dem an den negativen Ausgang 5 des Gleichspannungsgenerators 1 anzuschließenden Eingang 11, sondern auch mit dem Verbindungspunkt der beiden Wicklungen W1, W2 des Gleichspannungswandlers 2 galvanisch verbunden. Außerdem ist der andere Anschluss der Wicklung W2 über eine Diode D4 mit dem Eingang E1 und der Eingang E2 über eine weitere Diode D5 mit dem Verbindungspunkt 14 zwischen dem Schalter S4 und der Wicklung W1 verbunden. Dadurch sind insgesamt drei Stromkreise entstanden. Ein erster Stromkreis wird, ausgehend vom Eingang 10 des Gleichspannungswandlers 3, vom Schalter S4, der damit in Serie liegenden Wicklung W1 und einer vom Verbindungspunkt der beiden Wicklungen W1, W2 zum Eingang 11 führenden Leistung gebildet. Ein zweiter Stromkreis enthält die erste Wicklung W1 und führt vom Verbindungspunkt 14 über die erste Wicklung W1, den Erdanschluss E3, einen der Wicklung W1 zugeordneten Kondensator C2 und die Diode D5, die sämtlich in Serie liegen, zurück zum Verbindungspunkt 14. Ein dritter Stromkreis enthält schließlich die zweite Wicklung W2 und führt vom Verbindungspunkt der beiden Wicklungen W1, W2 über die Wicklung W2 und die Diode D4 zum Eingang E1, von dort über den anderen der beiden, der Wicklung W2 zugeordneten Kondensator C1 zum Erdanschluss E3 und von dort zurück zum Verbindungspunkt zwischen den beiden Wicklungen W1 und W2.

Die beiden Wicklungen W1, W2 sind so auf den gemeinsamen Kern 16 gewickelt, dass die Wicklung W2 beim Laden der Wicklung W1 aufgrund der magnetischen Kopplung durch die erste Wicklung W1 ebenfalls aufgeladen wird. Der Wicklungssinn beider Wicklungen W1, W2 ist dabei so gewählt, dass an in Fig. 1 durch eingezeichnete Punkte angedeuteten Anschlüssen dieselben Spannungspolaritäten erhalten werden.

Die Schalter S1, S2 und S4 sind in bekannter Weise zweckmäßig als Halbleiterschalter ausgebildet, die beim Betrieb mit nicht dargestellten Steuereinheiten (Microcontroller, PWM-Steuerungen usw.) periodisch ein- und ausgeschaltet werden können, wobei die Schaltfrequenz z. B. 16 kHz oder mehr beträgt.

Die Arbeitsweise der beschriebenen Vorrichtung ist im Wesentlichen wie folgt:
Auf der Seite des Gleichspannungsgenerators 1 wird bei geschlossenem Schalter S4 die gekoppelte Speicherdrossel 15 mit Hilfe des ersten Stromkreises 10, S4, W1, 11 geladen. Bei geöffnetem Schalter S4 kann sich die Wicklung W1 über den zweiten Stromkreis mit C2 entladen (über den Pfad 14, W1, E3, C2, E2, D5 und 14), während sich die Wicklung W2 über den dritten Stromkreis mit C1 entladen kann über dem Ptad vom Verbindungspunkt den beiden Wicklungen W1, W2 über W2, D4, E1, C1, E3 zum Verbindungspunkt den Wicklungen W1, W2. Für diese Funktionen werden nur ein Schalter (S4), eine gekoppelte Speicherdrossel (15) und zwei Dioden (D4, D5) benötigt, so dass der Aufwand vergleichsweise gering und der Wirkungsgrad groß ist. Außerdem ist, wie gewünscht, der negative Ausgang 5 des Gleichspannungsgenerators 1 geerdet bzw. an Erde anschließbar, wie dies auch für den Neutralleiter N des Netzes 8 gilt. Der Spannungszwischenkreis hat hier somit drei wirksame Anschlüsse E1, E2 und E3, an die der Gleichspannungswandler 2 mit Ausgängen 18,19 bzw. dem Eingang 11 angeschlossen ist bzw. angeschlossen werden kann, wenn er als separates Schaltungsteil hergestellt und/oder angeboten wird.

Auf der Seite des Wechselrichters 3 werden die Schalter S1, S2 abwechselnd ein- bzw. ausgeschaltet. Dadurch wird z. B. während der positiven Halbwelle des Schaltsignals (Schalter S1 zunächst geschlossen, Schalter S2 offen) die gegenüber E3 positive Seite (Eingang E1) des Kondensators C1 über den Verbindungspunkt 9 und die Netzdrossel L1 an die Phase L gelegt. Beim nachfolgenden Öffnen des Schalters S1 kann der Strom weiter durch die Netzdrossel L1, den Kondensator C2 und die Diode D2 fließen. Während der negativen Halbwelle des Netzes 8 (Schalter S1 offen, Schalter S2 zunächst geschlossen) wird dagegen die gegenüber E3 negative Seite (Eingang E2) des Kondensators C2 über den Verbindungspunkt 9 und die Drossel L1 an die Phase L gelegt, wobei der Strom nach dem Schließen des Schalters S2 weiter durch die Diode D1 und den Kondensator C1 fließen kann. Die beiden Kondensatoren C1, C2 werden dadurch abwechselnd entladen und wieder geladen.

Bei symmetrischer Belastung und gleicher Windungszahl von W1 und W2 sind die Spannungen an C1 und C2 gleich groß. Wird beim Betrieb z. B. C1 stärker vom netzseitigen Wechselrichter 3 als C2 belastet, so wird automatisch der Ladestrom aus W2 größer als der aus W1. Die Schaltung "symmetriert" sich dadurch selbsttätig, was eine Grundvoraussetzung für den Betrieb des Wechselrichters 3 auf der Netzseite ist.

Die beschriebene Ausbildung des Gleichspannungswandlers 2 bringt den Vorteil mit sich, dass der Gleichspannungsgenerator 1 mit einem vergleichsweise großen Bereich von Ausgangsspannungen betrieben werden kann. Würde der Gleichspannungswandler 2 fehlen, dann müsste sichergestellt werden, dass der Gleichspannungsgenerator 1 auch unter ungünstigen Verhältnissen stets eine so hohe Ausgangsspannung an die Eingänge E1 und E2 liefert, dass die Kondensatoren C1 und C2 auf eine höhere Spannung aufgeladen werden, als der Netzamplitude (in der Regel ca. ± 325 V) entspricht. Ist dagegen ein hochsetzender Gleichspannungswandler 2 vorhanden, dann können die Spannungen an den Kondensatoren C1, C2 über die Wahl des Tastverhältnisses, mit dem der Schalter S4 betrieben wird, auch dann auf die gewünschte Höhe eingestellt werden, wenn die Ausgangsspannung des Gleichspannungsgenerators 1 kleiner ist, als vom Wechselrichter 3 (bzw. vom Netz 8) mindestens benötigt wird.

Die insoweit bekannte Vorrichtung ist weiterhin sehr flexibel einsetzbar. Das ergibt sich daraus, dass die Spannungen an C1 und C2 in Abhängigkeit vom gewählten Tastverhältnis für S4 sowohl größer als auch kleiner als die Eingangsspannung am Kondensator C sein können. Ist das Tastverhältnis größer als 0,5, dann arbeitet der Gleichspannungswandler hochsetzend. Ist das Tastverhältnis kleiner als 0,5, dann arbeitet der Gleichspannungswandler 2 tiefsetzend. Ein Tastverhältnis von 0,5 führt praktisch zu einer Direkteinspeisung der am Ausgang des Gleichspannungsgenerators 1 anliegenden Spannung. Damit wird ein großer Betriebsspannungsbereich mit nur einem Schalter im Gleichspannungswandler 2 bei einem geerdeten Gleichspannungsgenerator 1 erhalten. Die maximale Spannungsbelastung der Wechselrichterschalter S1 und S2 beträgt etwa 2 · UC1, wobei UC1 die maximale Spannung am Kondensator C1 ist. Im einfachsten Fall kann auch immer nur einer dieser Schalter pro halber Netzperiode hochfrequent geschaltet werden, während der andere ausgeschaltet bleibt. Außerdem ist auf der Wechselrichterseite ein kontinuierlicher Stromfluss in das Netz 8 möglich.

Ein Nachteil der beschriebenen Vorrichtung besteht, wie bereits oben näher erläutert wurde, in der Belastung des Schalters S4 im offenen Zustand mit einer Spannung US4 = UC + UC2, wobei UC und UC2 die Spannungen an den Kondensatoren C und C2 sind. Dieser Nachteil wird erfindungsgemäß vermieden.

Fig. 2 zeigt ein erstes Ausführungsbeispiel der erfindungsgemäßen Vorrichtung, bei dem die gewünschten Wirkungen mit Hilfe einer gekoppelten Speicherdrossel 15 entsprechend Fig. 1 sowie mit zwei Schaltern S5, S6 und drei Dioden D6, D7 und D8 erreicht werden, d. h. auch hier ist der Schaltungsaufwand gering. Ein erster Schalter S5 ist zwischen den Eingang 10 und einen Verbindungspunkt 22 gelegt, an den der eine Anschluss der Wicklung W1 der Speicherdrossel 15 angeschlossen ist. Der andere Anschluss der Wicklung W1 ist über einen zweiten Verbindungspunkt 23 und mittels eines zweiten Schalters S6 mit dem als Erdanschluss ausgebildeten Eingang E3 des Wechselrichters 3 verbunden, der auch zum Anschluss an den Eingang 11 des Gleichspannungswandlers 2 bzw. an den negativen Ausgang 5 des Gleichspannungsgenerators 1 dient. Damit bildet der Strompfad von 10 über S5, 22, W1, 23, S6, 11 und zurück zu 10 einen ersten Stromkreis.

Weiterhin ist gemäß Fig. 2 eine vom Erdanschluss E3 ausgehende erste Diode D6 über den Verbindungspunkt 22, die Wicklung W1, den Verbindungspunkt 23, eine zweite Diode D7 und den der Wicklung W1 hier zugeordneten Kondensator C1 zurück zum Erdanschluss E3 geführt. Dadurch entsteht ein zweiter Stromkreis, in welchem die Dioden D6, D7 nur in Richtung E1 leitend gemacht werden können. Schließlich ist ein dritter, die zweite Wicklung W2 enthaltender Stromkreis vorhanden, der vom Erdanschluss E3 über den der Wicklung W2 hier zugeordneten Kondensator C2, eine dritte Diode D8 und die zweite Wicklung W2 zurück zum Erdanschluss E3 führt.

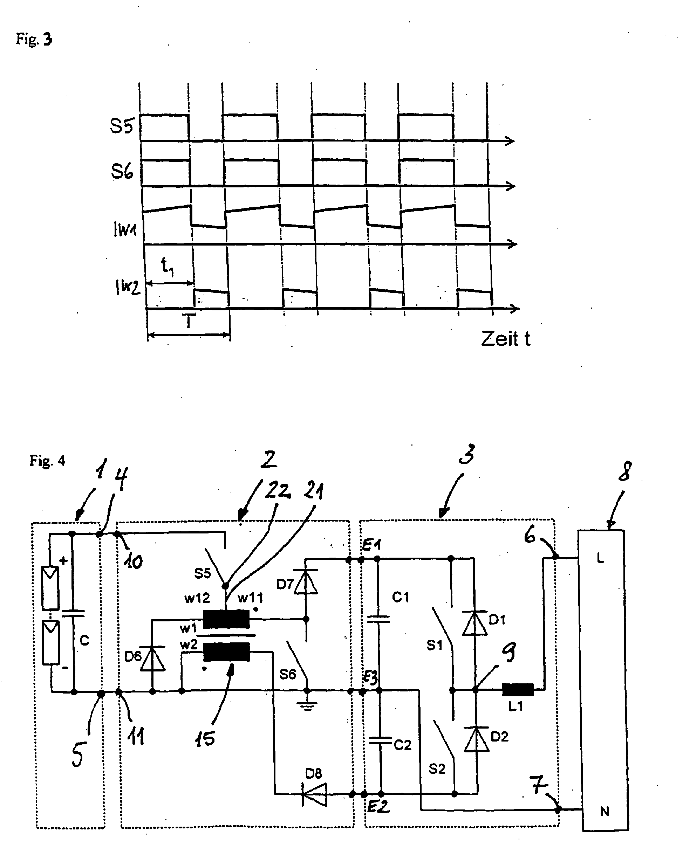

Die Signale für die Ansteuerung der Schalter S5 und S6 sowie die Stromverläufe in den Wicklungen W1, W2 der Speicherdrossel 15 ergeben sich beispielhaft aus Fig. 3. Daraus ist ersichtlich, dass die beiden Schalter S5, S6 immer gleichzeitig ein- bzw. ausgeschaltet werden. Die Arbeitsweise der Vorrichtung nach Fig. 2, die im übrigen entsprechend Fig. 1 ausgebildet ist, ist daher im Wesentlichen wie folgt.

Beim gleichzeitigen Einschalten der Schalter S5 und S6 wird der beschriebene erste Stromkreis geschlossen, wodurch die Speicherdrossel 15 in der oben beschriebenen Weise geladen wird. Befinden sich die Schalter S5, S6 dagegen im geöffneten Zustand, dann wird einerseits die Wicklung W1 über D6, W1, D7 und C1 und andererseits die Wicklung W2 über C2 und D8 entladen. Wie in Fig. 1 wird somit jeder der beiden Kondensatoren C1, C2 von einer zugeordneten Wicklung W1, W2 aufgeladen.

Mit der Vorrichtung nach Fig. 2 werden alle oben genannten Vorteile in entsprechender Weise wie mit der Vorrichtung nach Fig. 1 erreicht. Unterschiedlich und besonders vorteilhaft ist jedoch, dass die maximale Spannungsbelastung am Schalter S5 im geöffneten Zustand durch die Spannung UC am Kondensator C bzw. die Ausgangsspannung des Gleichspannungsgenerators 1 gegeben ist, während die maximale Belastung des Schalters S6 mit der maximalen Spannung an C1 erfolgt.

Im übrigen ist die Vorrichtung nach Fig. 2 in gleicher Weise flexibel wie die Vorrichtung nach Fig. 1, weil die Spannungen an C1 und C2 sowohl größer als auch kleiner als die Ausgangsspannung am Gleichspannungsgenerator 1 sein können, so dass ein hoher Betriebsspannungsbereich erreicht wird.

Fig. 4 zeigt ein gegenüber Fig. 2 dadurch modifiziertes Ausführungsbeispiel, dass die Wicklung W1 in zwei Wicklungsteile W11 und W12 (= Windungszahlen) geteilt ist. Die Anordnung ist in diesem Fall so getroffen, dass ein Mittelanschluss bzw. eine Wicklungsanzapfung 21 der Wicklung W1 an einen Verbindungspunkt 22 zum ersten Schalter S5 gelegt ist und der durch diese Anzapfung 21 festgelegte Teil W11 der Wicklung W1 im ersten Stromkreis liegt, der dem Laden der Speicherdrossel 20 dient, wohingegen der zweite Stromkreis die gesamte, zwischen den Dioden D6 und D7 liegende erste Wicklung W1 bzw. den Teil W11 + W12 davon enthält. Dadurch lässt sich erfindungsgemäß ein weiteres Optimierungspotential der erfindungsgemäßen Anordnung für das Verhältnis von Eingangsspannung und Ausgangsspannung, die Belastung des Schalters S5 und der Dioden D6, D7 und D8 erschließen. Bei größeren Übersetzungsverhältnissen besteht neben dem Tastverhältnis für S5 und S6 noch die Möglichkeit, über das Verhältnis von W12 : (W12 + W11) auf die effektive Strom- und Spannungsbelastung der Bauelemente Einfluss zu nehmen. Die Lage der Anzapfung 21 kann im Prinzip beliebig gewählt werden. Ein besonderer Vorteil der Anzapfung 21 besteht darin, dass die maximale Spannungsbelastung am Schalter S5 im offenen Zustand nur noch durch die Spannung US5 = UC - [W12/(W12 + W11)]. UC1 gegeben ist und am Schalter S6 wiederum US6 = UC1 beträgt.

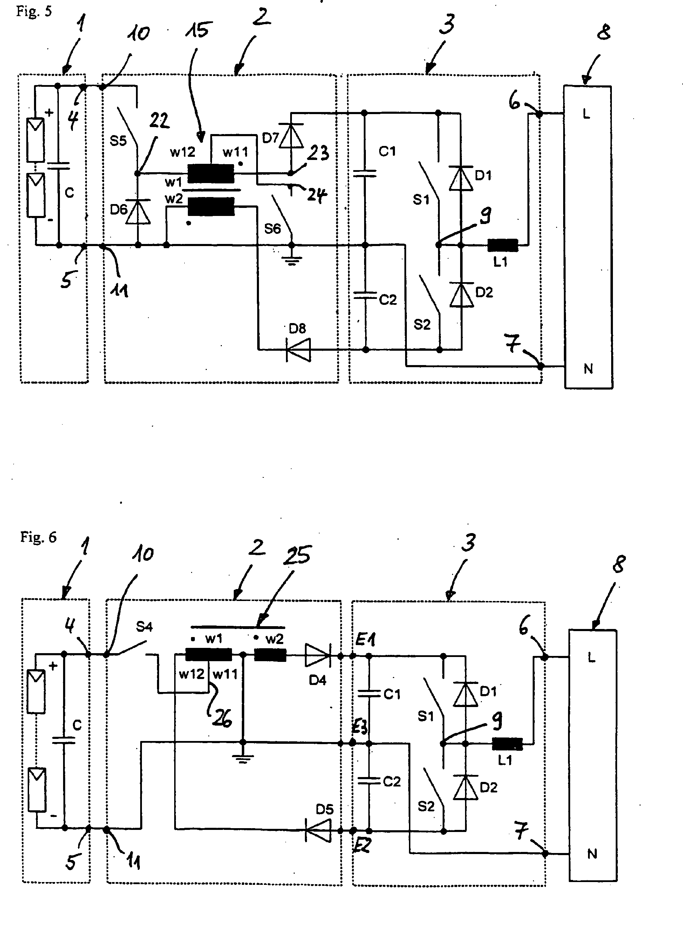

Alternativ kann die Anzapfung 21 gemäß Fig. 5 an einen Verbindungspunkt 24 zum zweiten Schalter S6 gelegt werden, während der aus den Teilen W11 und W12 gebildete Teil der Speicherdrossel 15 wie in Fig. 2 zwischen die Verbindungspunkte 22 und 23 gelegt wird. Dadurch wird nur der durch die Anzapfung 21 festgelegte Teil W12 der Wicklung W1 in den ersten Stromkreis gelegt und während der Ladezyklen benutzt, wohingegen die ganze Wicklung W1 bzw. der Teil W11 + W12 davon im zweiten Stromkreis liegt und während der Entladezyklen wirksam ist. Die maximale Belastung des Schalters S5 beträgt hier US5 = UC, die maximale Belastung des Schalters S6 dagegen US6 = UC1 - [W11/(W12+W11)] · UC1.

Fig. 6 zeigt ein Ausführungsbeispiel, das durch Teilung der ersten Wicklung W1 einer Speicherdrossel 25 auch bei Anwendung einer nur den einen Schalter S4 aufweisenden Vorrichtung nach Fig. 1 eine Reduzierung der Spannungsbelastung ermöglicht. Hierzu wird die erste Wicklung W1 der gekoppelten Speicherdrossel 25 durch eine Wicklungsanzapfung 26 in zwei Teile W11 und W12 ( = Windungszahlen) geteilt. Abweichend von Fig. 1 ist außerdem die Anzapfung 26 an dem Schalter S4 angeschlossen, wohingegen der normale Eingangsanschluss von W1 wie in Fig. 1 mit dem Ausgang der Diode D5 verbunden ist. Dadurch liegt nur der zwischen der Anzapfung 26 und einem Ausgangsanschluss liegende Teil W11 der ersten Wicklung W1 im oben beschriebenen ersten Stromkreis (10, S4, 14, W11, 11), während wie in Fig. 1 die gesamte Wicklung W1 bzw. ein Teil W11 + W12 davon im zweiten Stromkreis mit C2 und D5 liegt. Dadurch lässt sich erfindungsgemäß die maximale Belastung des Schalters S4 auf den Wert US4 = [W11/(W11 + W12)] UC2 + UC reduzieren. Die Lage der Anzapfung 26 kann wie in Fig. 4 und 5 im Prinzip beliebig gewählt werden.

Die Arbeitsweise des Wechselrichters 3 ist in allen oben beschriebenen Fällen im Wesentlichen identisch.

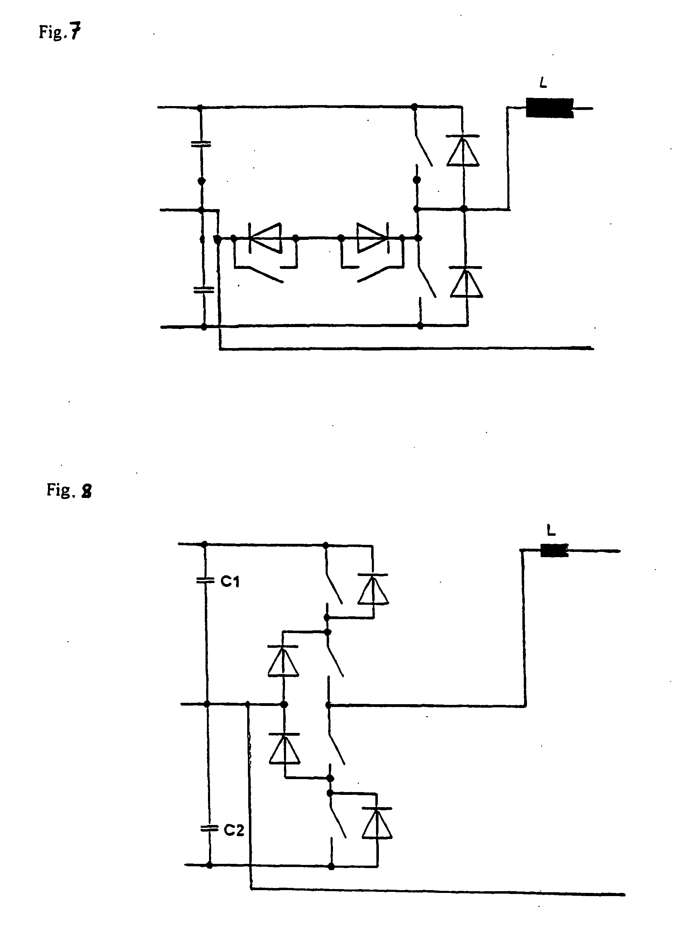

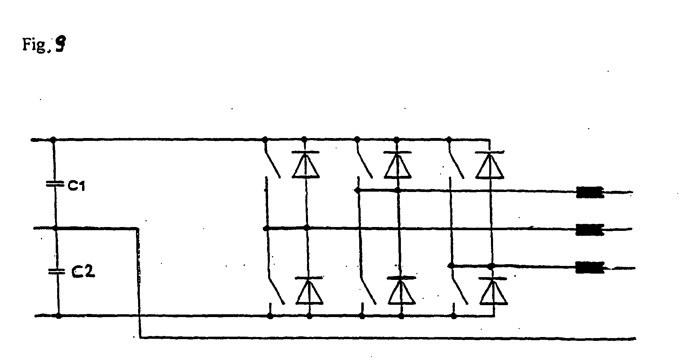

Obwohl die bisherige Beschreibung ausschließlich auf den als Halbbrückenwechselrichter ausgebildeten Wechselrichter 3 Bezug nimmt, ist für den Fachmann klar, dass auch andere Wechselrichter mit einem bipolaren Spannungszwischenkreis an den erfindungsgemäßen Gleichspannungswandler 2 angeschlossen werden können. Das ist schematisch in Fig. 7 bis 9 dargestellt. Fig. 7 zeigt einen Halbbrückenwechselrichter in 3-Punkt-Schaltung, Fig. 8 einen weiteren Wechselrichter in 3-Punkt-Schaltung mit Mittelpunkt (jeweils in 1-phasiger Ausführung) und Fig. 9 einen Wechselrichter für 3-phasige Einspeisung in das Netz 8. Alle drei Wechselrichter haben einen bipolaren Spannungszwischenkreis, die Eingänge E1 bis E3 und die Ausgänge 6, 7 entsprechend der obigen Beschreibung. Da Wechselrichter dieser Art an sich bekannt sind, erscheinen weitere Ausführungen hierzu nicht erforderlich.

Die magnetische Kopplung der Wicklungen W1 und W2 wird vorzugsweise dadurch erhalten, dass sie je nach Bedarf übereinander oder hintereinander auf einen gemeinsamen Kern gewickelt werden. Sie weisen vorzugsweise dieselben Windungszahlen auf und werden bei der schematisch dargestellten Anordnung nach Fig. 2 und 4 zweckmäßig mit entgegengesetztem Wicklungssinn auf den Kern 16 gewickelt, um die richtigen Stromrichtungen bei den Lade- und Entladevorgängen zu erhalten.

Die Erfindung ist nicht auf die beschriebenen Ausführungsbeispiele beschränkt, die auf vielfache Weise abgewandelt werden können. Das gilt insbesondere auch insoweit, als die Wechselrichter 3 und die Gleichspannungswandler 2 als voneinander getrennte Bauteile hergestellt und vertrieben werden können, wenn sie auch bevorzugt, wie aus den Zeichnungen ersichtlich ist, als eine fertige Baueinheit hergestellt und vertrieben werden. Daher betrifft die Erfindung nicht nur die Kombination aus einem Gleichspannungswandler 2 und einem Wechselrichter 3, sondern auch den Gleichspannungswandler 2 allein. Weiterhin ist klar, dass in der obigen Beschreibung nur die zum Verständnis der Erfindung erforderlichen Bauteile beschrieben wurden und insbesondere die erforderlichen und an sich bekannten Steuerorgane, MPP-Regelungen usw. zusätzlich vorhanden sein können. Außerdem versteht sich, dass die verschiedenen Merkmale auch in anderen als den beschriebenen und dargestellten Kombinationen angewendet werden können.

## Patentansprüche

1. Vorrichtung zur Einspeisung elektrischer Energie in ein Energieversorgungsnetz (8), enthaltend einen zum Anschluss an einen Gleichspannungsgenerator (1) bestimmten Gleichspannungswandler (2) und einen mit diesem verbundenen, zum Anschluss an das Energieversorgungsnetz (8) bestimmten Wechselrichter (3), der einen bipolaren Spannungszwischenkreis mit zwei in Serie liegenden Kondensatoren (C1, C2) enthält, die an einem mit einem negativen Ausgang (5) des Gleichspannungsgenerators (1) verbundenen Erdanschluss (E3) miteinander verbunden sind, wobei der Gleichspannungswandler (2) wenigstens zwei Dioden, einen Schalter und eine Speicherdrossel aufweist, die eine erste Wicklung (W1) und eine zweite Wicklung (W2) enthält, wobei diese beiden Wicklungen (W1, W2) magnetisch miteinander gekoppelt und mit je einem ihrer Anschlussenden derart galvanisch miteinander verbunden sind, dass in einem ersten Schaltzustand die erste Wicklung (W1) vom Gleichspannungsgenerator (1) und die zweite Wicklung (W2) aufgrund der magnetischen Kopplung über die erste Wicklung (W1) aufgeladen wird und in einem zweiten Schaltzustand beide Wicklungen (W1, W2) über je einen zugeordneten der beiden Kondensatoren (C1, C2) und eine zugeordnete Diode entladen werden,
**dadurch gekennzeichnet,**
**dass** ein erster Anschluss der ersten Wicklung (W1) an einem ersten Verbindungspunkt (22) mit einem ersten Schalter (S5) und ein zweiter Anschluss der ersten Wicklung (W1) an einem zweiten Verbindungspunkt (23) mit einem zweiten Schalter (S6) derart verbunden ist, dass die erste Wicklung (W1) mit den beiden Schaltern (S5, S6) einen an zugeordnete Ausgänge (4, 5) des Gleichspannungsgenerators (1) angeschlossenen, ersten Stromkreis bildet und außerdem in einem zweiten Stromkreis liegt, der vom Erdanschluss (E3) über eine erste Diode (D6), den ersten Verbindungspunkt (22), die erste Wicklung (W1), den zweiten Verbindungspunkt (23), eine zweite Diode (D7) und den ihr zugeordneten Kondensator (C1) zurück zum Erdanschluss (E3) führt, und dass die zweite Wicklung (W2) in einem dritten Stromkreis angeordnet ist, der vom Erdanschluss (E3) über den ihr zugeordneten Kondensator (C2), eine dritte Diode (D8) und die zweite Wicklung (W2) zurück zum Erdanschluss (E3) führt.

2. Vorrichtung zur Einspeisung elektrischer Energie in ein Energieversorgungsnetz (8), enthaltend einen zum Anschluss an einen Gleichspannungsgenerator (1) bestimmten Gleichspannungswandler (2) und einen mit diesem verbundenen, zum Anschluss an das Energieversorgungsnetz (8) bestimmten Wechselrichter (3), der einen bipolaren Spannungszwischenkreis mit zwei in Serie liegenden Kondensatoren (C1, C2) enthält, die an einem mit einem negativen Ausgang (5) des Gleichspannungsgenerators (1) verbundenen Erdanschluss (E3) miteinander verbunden sind, wobei der Gleichspannungswandler (2) wenigstens zwei Dioden, einen Schalter (S4) und eine Speicherdrossel (25) aufweist, die eine erste Wicklung (W1) und eine zweite Wicklung (W2) enthält, wobei diese beiden Wicklungen (W1, W2) magnetisch miteinander gekoppelt und mit je einem ihrer Anschlussenden derart galvanisch miteinander verbunden sind, dass in einem ersten Schaltzustand die erste Wicklung (W1) vom Gleichspannungsgenerator (1) und die zweite Wicklung (W2) aufgrund der magnetischen Kopplung über die erste Wicklung (W1) aufgeladen wird und in einem zweiten Schaltzustand beide Wicklungen (W1, W2) über je einen zugeordneten der beiden Kondensatoren (C1, C2) und eine zugeordnete Diode (D4, D5) entladen werden,
**dadurch gekennzeichnet,**
**dass** eine der Wicklungen (W1) geteilt und derart mit einer an den Schalter (S4) angeschlossenen Wicklungsanzapfung (26) versehen ist, dass nur ein durch diese Anzapfung (26) festgelegter erster Teil (W11) der ersten Wicklung (W1) in einem ersten Stromkreis von drei Stromkreisen liegt, während in einem zweiten Stromkreis der drei Stromkreise ein zweiter Teil (W11 + W12) der ersten Wicklung (W1) angeordnet ist, wobei die beiden Wicklungen (W1, W2) auf einen gemeinsamen Kern gewickelt sind.

3. Vorrichtung nach Anspruch 1,
**dadurch gekennzeichnet,**
**dass** eine der Wicklungen (W1) geteilt und derart mit einer an einen der Verbindungspunkte (21, 23) angeschlossenen Wicklungsanzapfung (22) versehen ist, dass nur ein durch diese Anzapfung (22) festgelegter erster Teil (W11) der ersten Wicklung (W1) in dem ersten Stromkreis liegt, während in dem zweiten Stromkreis ein zweiter Teil (W11 + W12) der ersten Wicklung (W1) angeordnet ist.

4. Vorrichtung nach Anspruch 1,
**dadurch gekennzeichnet,**
**dass** die beiden Wicklungen (W1, W2) auf einen gemeinsamen Kern (16) gewickelt sind.

5. Vorrichtung nach Anspruch 4,
**dadurch gekennzeichnet,**
**dass** die Wicklungen (W1, W2) mit entgegengesetztem Wicklungssinn auf den Kern (16) gewickelt sind

6. Vorrichtung nach einem der Ansprüche 1 bis 5,
**dadurch gekennzeichnet,**
**dass** die beiden Wicklungen (W1, W2) gleiche Windungszahlen aufweisen.

7. Vorrichtung nach einem der Ansprüche 1 bis 6,
**dadurch gekennzeichnet,**
**dass** der Wechselrichter (3) als ein eine Halbbrücke aufweisender Wechselrichter ausgebildet ist.

8. Vorrichtung nach einem der Ansprüche 1 bis 6,
**dadurch gekennzeichnet,**
**dass** der Wechselrichter (3) als ein Wechselrichter mit einer Halbbrücke in 3-Punkt-Schaltung ausgebildet ist (Fig. 7).

9. Vorrichtung nach einem der Ansprüche 1 bis 6,
**dadurch gekennzeichnet,**
**dass** der Wechselrichter (3) als ein Wechselrichter mit einer Halbbrücke in 3-Punkt-Schaltung mit Mittelpunkt ausgebildet ist (Fig. 8).

10. Vorrichtung nach einem der Ansprüche 1 bis 6,
**dadurch gekennzeichnet,**
**dass** der Wechselrichter (3) zur ein- oder dreiphasigen Einspeisung der elektrischen Energie in das Energieversorgungsnetz (8) ausgebildet ist (Fig. 2 bis 8 bzw. Fig. 9).

11. Vorrichtung nach Anspruch 10,
**dadurch gekennzeichnet,**
**dass** der Gleichspannungswandler (2) mit dem Wechselrichter (3) zu einer Baueinheit zusammengefasst ist.

## Claims

1. Device for feeding electrical energy into a power grid (8), including a direct voltage converter (2), which is intended for connection to a direct voltage generator (1), and an inverter (3), which is connected thereto and intended for connection to the power grid (8) and which comprises a bipolar voltage intermediate circuit with two capacitors (C1, C2), which are arranged in series and which are connected together at an earth connection (E3) that is connected to a negative output (5) of the direct voltage generator (1), wherein the direct voltage converter (2) comprises at least two diodes, a switch and a storage choke, which comprises a first winding (W1) and a second winding (W2), wherein these two windings (W1, W2) are magnetically coupled together and electrically connected together by a respective one of their terminals in such a manner that in a first switching state the first winding (W1) is charged by the direct voltage generator (1) and the second winding (W2) is charged via the first winding (W1) due to the magnetic coupling and in a second switching state the two windings (W1, W2) are respectively discharged via an associated one of the two capacitors (C1, C2) and an associated diode, **characterised in that** a first terminal of the first winding (W1) is connected at a first connecting point (22) to a first switch (S5) and a second terminal of the first winding (W1) is connected at a second connecting point (23) to a second switch (S6) such that the first winding (W1) on the one hand provides, together with the two switches (S5, S6), a first electric circuit that is connected to associated outputs (4, 5) of the direct voltage generator (1) and on the other hand is located in a second electric circuit that leads from the earth connection (E3) via a first diode (D6), the first connecting point (22), the first winding (W1), the second connecting point (23), a second diode (D7) and the capacitor (C1) associated therewith back to the earth connection (E3) and that the second winding (W2) is located in a third electric circuit that leads from the earth connection (E3) via the capacitor (C2) associated therewith, a third diode (D8) and the second winding (W2) back to the earth connection (E3).

2. Device for feeding electrical energy into a power grid (8), including a direct voltage converter (2), which is intended for connection to a direct voltage generator (1), and an inverter (3), which is connected thereto and intended for connection to the power grid (8) and which comprises a bipolar voltage intermediate circuit with two capacitors (C1, C2), which are arranged in series and which are connected together at an earth connection (E3) that is connected to a negative output (5) of the direct voltage generator (1), wherein the direct voltage converter (2) comprises at least two diodes, a switch (S4) and a storage choke (25), which comprises a first winding (W1) and a second winding (W2), wherein these two windings (W1, W2) are magnetically coupled together and electrically connected together by a respective one of their terminals in such a manner that in a first switching state the first winding (W1) is charged by the direct voltage generator (1) and the second winding (W2) is charged via the first winding (W1) due to the magnetic coupling and in a second switching state the two windings (W1, W2) are respectively discharged via an associated one of the two capacitors (C1, C2) and an associated diode, **characterised in that** one of the windings (W1) is divided and provided with a winding tap (26) that is connected to the switch (S4) such that only a first part (W11) of the first winding (W1), which is determined by this tap (26), lies in a first electric circuit of three electric circuits, while a second part (W11 + W12) of the first winding (W1) is located in a second electric circuit of the three electric circuits, wherein the two windings (W1, W2) are wound on a common core.

3. Device according to claim 1, **characterised in that** one of the windings (W1) is divided and provided with a winding tap (22) that is connected to one of the connecting points (21, 23) such that only a first part (W11) of the first winding (W1), which is determined by this tap (22), lies in the first electric circuit, whilst a second part (W11 + W12) of the first winding (W1) is located in the second electric circuit.

4. Device according to claim 1, **characterised in that** the two windings (W1, W2) are wound on a common core (16).

5. Device according to claim 4, **characterised in that** the windings (W1, W2) are wound on the core (16) in opposite winding senses.

6. Device according to any one of claims 1 to 5, **characterised in that** the two windings (W1, W2) have the same number of winding turns.

7. Device according to any one of claims 1 to 6, **characterised in that** the inverter (3) is configured to be an inverter having a half bridge.

8. Device according to any one of claims 1 to 6, **characterised in that** the inverter (3) is configured to be an inverter with a half bridge in a three-point circuit (Fig. 7).

9. Device according to any one of claims 1 to 6, **characterised in that** the inverter (3) is configured to be an inverter with a half bridge in a three-point circuit with a centre point (Fig. 8).

10. Device according to any one of claims 1 to 6, **characterised in that** the inverter (3) is configured for a single-phase or three-phase feeding of the electrical energy to the power grid (8) (Figs. 2 to 8 or Fig. 9).

11. Device according to claim 10, **characterised in that** the direct voltage converter (2) is combined with the inverter (3) to form a constructional unit.

## Revendications

1. Dispositif pour l'injection d'énergie électrique dans un réseau de distribution d'énergie (8), comprenant un convertisseur de tenson continue (2) prévu pour la connexion à un générateur de tension continue (1) et un onduleur (3) relié à ce convertisseur, prévu pour la connexion au réseau de distribution d'énergie (8) et qui comporte un circuit intermédiaire de tension bipolaire comportant deux condensateurs (C1, C2) montés en série, qui sont reliés entre eux au niveau d'une connexion de terre (E3) reliée à une sortie négative (5) du générateur de tension continue (1), dans lequel le convertisseur de tension continue (2) comporte au moins deux diodes, un interrupteur et une réactance à accumulation, laquelle comprend un premier enroulement (W1) et un second enroulement (W2), dans lequel ces deux enroulements (W1, W2) sont couplés magnétiquement l'un à l'autre et sont reliés l'un à l'autre par une liaison galvanique, chacun par une de ses extrémités de connexion, de sorte que, dans un premier état de commutation, le premier enroulement (W1) est chargé par le générateur de tension continue (1) et le second enroulement (W2) est chargé par l'intermédiaire du premier enroulement (W1) sous l'effet du couplage magnétique, et que, dans un second état de commutation, les deux enroulements (W1, W2) sont déchargés, chacun à son tour par l'intermédiaire de celui des deux condensateurs (C1, C2), qui leur sont associés et de la diode qui leur est associée,
**caractérisé en ce que**
une première connexion du premier enroulement (W1) est reliée à un premier point de jonction (22) pourvu d'un premier interrupteur (S5), et une seconde connexion du premier enroulement (W1) est reliée à un second point de jonction (23) pourvu d'un second interrupteur (S6) de sorte que le premier enroulement (W1) forme avec les deux interrupteurs (S5, S6) un premier circuit connecté à des sorties correspondantes (4, 5) du générateur de tension continue (1) et est par ailleurs intercalé dans un second circuit qui, en partant de la connexion de terre (E3), par l'intermédiaire d'une première diode (D6), du premier point de jonction (22), du premier enroulement (W1), du second point de jonction (23), d'une deuxième diode (D7) et du condensateur (1) associé, ramène à la connexion de terre (E3), et **en ce que** le second enroulement (W2) est intercalé dans un troisième circuit qui, en partant de la connexion de terre (E3), par l'intermédiaire du condensateur (C2) associé, d'une troisième diode (D8) et du second enroulement (W2), ramène à la connexion de terre (E3).

2. Dispositif pour l'injection d'énergie électrique dans un réseau de distribution d'énergie (8), comprenant un convertisseur de tenson continue (2) prévu pour la connexion à un générateur de tension continue (1) et un onduleur (3) relié à ce convertisseur, prévu pour la connexion au réseau de distribution d'énergie (8) et qui comporte un circuit intermédiaire de tension bipolaire comportant deux condensateurs (C1, C2) montés en série, qui sont reliés entre eux au niveau d'une connexion de terre (E3) reliée à une sortie négative (5) du générateur de tension continue (1), dans lequel le convertisseur de tension continue (2) comporte au moins deux diodes, un interrupteur (S4) et une réactance à accumulation (25), laquelle comprend un premier enroulement (W1) et un second enroulement (W2), dans lequel ces deux enroulements (W1, W2) sont couplés magnétiquement l'un à l'autre et reliés l'un à l'autre par une liaison galvanique, chacun par une de ses extrémités de connexion, de sorte que, dans un premier état de commutation, le premier enroulement (W1) est chargé par le générateur de tension continue (1) et le second enroulement (W2) est chargé par l'intermédiaire du premier enroulement (W1) sous l'effet du couplage magnétique, et que, dans un second état de commutation, les deux enroulements (W1, W2) sont déchargés, chacun par l'intermédiaire de celui des deux condensateurs (C1, C2), qui leur sont associés, et de la diode (D4, D5) qui leur est associée,
**caractérisé en ce que**
un des enroulements (W1) est divisé et doté d'une prise d'enroulement (26) connectée à l'interrupteur (S4) de sorte que seule une première partie (W11) du premier enroulement (W1), qui est définie par cette prise (26), se trouve dans un premier de trois circuits, tandis qu'une seconde partie (W11 + W12) du premier enroulement (W1) est disposée dans un deuxième des trois circuits, les deux enroulements (W1, W2) étant bobinés sur un noyau commun.

3. Dispositif selon la revendication 1,
**caractérisé en ce que**
un des enroulements (W1) est divisé et doté d'une prise d'enroulement (22) connectée à un des points de jonction (21, 23) de sorte que seule une première partie (W11) du premier enroulement (W1), qui est définie par cette prise (22), se trouve dans le premier circuit, tandis qu'une seconde partie (W11 + W12) du premier enroulement (W1) est disposée dans le deuxième circuit.

4. Dispositif selon la revendication 1,
**caractérisé en ce que**
les deux enroulements (W1, W2) sont bobinés sur un noyau commun (16).

5. Dispositif selon la revendication 4,
**caractérisé en ce que**
les enroulements (W1, W2) sont bobinés sur le noyau (16) avec des sens de bobinage opposés.

6. Dispositif selon l'une des revendications 1 à 5,
**caractérisé en ce que**
les deux enroulements (W1, W2) comportent les mêmes nombres de tours.

7. Dispositif selon l'une des revendications 1 à 6,
**caractérisé en ce que**
l'onduleur (3) est formé par un onduleur comportant un demi-pont.

8. Dispositif selon l'une des revendications 1 à 6,
**caractérisé en ce que**
l'onduleur (3) est formé par un onduleur comportant un demi-pont dans un montage à 3 points (Fig. 7).

9. Dispositif selon l'une des revendications 1 à 6,
**caractérisé en ce que**
l'onduleur (3) est formé par un onduleur comportant un demi-pont dans un montage à 3 points avec un point central (Fig. 8).

10. Dispositif selon l'une des revendications 1 à 6,
**caractérisé en ce que**
l'onduleur (3) est formé pour l'injection de l'énergie électrique en monophasé ou en triphasé dans le réseau de distribution d'énergie (8) (Fig. 2 à 8 ou Fig. 9).

11. Dispositif selon la revendication 10,
**caractérisé en ce que**
le convertisseur de tension continue (2) est lié à l'onduleur (3) pour former une unité modulaire.
